# EUROPEAN PATENT APPLICATION

(11) **EP 4 674 939 A1**
(43) Date of publication of application: **07.01.2026**
(21) Application number: 25183444.6
(22) Date of filing: 17.06.2025
(51) Int. Cl.: C12G 1/08

(54) **MACHINE FOR THE DISGORGING AND DOSAGE FOR PRODUCING SPARKLING WINES**

(30) Priority: 01.07.2024 IT 202400015187
(71) Applicant: Primec S.r.l., 43122 Parma (PR) (IT)
(72) Inventor: FICAI, Pietrandrea Gabriele, 43121 Parma (PR) (IT)
(74) Representative: Caldon, Giuliano

(57) **Abstract**

Machine for the disgorgement and dosage for producing sparkling wines, which comprises first transport means (21), adapted to transport, along a first advancement direction (A1), multiple bottles (100), an inlet station (22) intercepted by the first transport means (21), a treatment unit (3) adapted to receive the bottles (100) at the inlet station (22), an outlet station (23) arranged for receiving the bottles (100) from the treatment unit (3), and second transport means (24), which are adapted to transport the bottles (100) outside the outlet station (23) along a second advancement direction (A2). The treatment unit (3) comprises multiple operative modules (4), which are placed between the inlet station (22) and the outlet station (23) and are side-by-side with each other along a flanking direction (X) substantially parallel to the first advancement direction (A1). Each operative module (4) comprises movement means (5) arranged for moving the bottles (100) from the inlet station (22) to the outlet station (23) along a third advancement direction (A3) transverse to the first (A1) and second advancement direction (A2), and several operative stations (6) placed in succession along the third advancement direction (A3). The operative stations (6) comprise at least one disgorgement station (61) provided with an uncapping device (611) arranged for removing the cap from the bottle (100) and a dosage station (62) provided with a dosing tap (621) arranged for introducing a specific dose of dosage syrup in the bottle (100).

## Description

### Field of application

The present invention relates to a machine for the disgorgement and dosage for producing sparkling wines, according to the preamble of independent claim no. 1.

The machine in question is intended to be used in an industrial plant for producing sparkling wine, in particular for carrying out the disgorgement operations, by means of which the yeast residues are removed from the bottle after the riddling step, and the dosage operations, through which a dose of a specific syrup ("liqueur d'expedition" or "liqueur de dosage") is inserted into the bottle. Therefore, the machine falls within the sector of the production of equipment for carrying out the sparkling wine production process.

### Prior art

As is known, the sparkling wine production process (also called "secondary fermentation") involves, in short, adding a sugar solution mixed with appropriate yeasts to a mixture of base wines which, following fermentation, generates carbon dioxide to make the wine sparkling.

There are different techniques for producing sparkling wine, such as the classic method, the ancestral method, the Charmat method.

In particular, what is known as the classic method involves carrying out several steps, including a step of assembling the base wines, in which several base wines are mixed together to obtain what is called a cuvée. Then a step of adding the tirage solution is foreseen, in which a solution containing sugars, yeasts and mineral salts is added to the cuvée to carry out the fermentation process that will lead to the development of alcohol and carbon dioxide.

A bottling step is then planned, in which the cuvée with the tirage solution added is bottled in dark-colored bottles and closed with a crown cap.

A second fermentation step is then foreseen, in which the bottles are stored horizontally in temperature-controlled environments for a period typically between eighteen months and many years, during which the sugars are transformed by the yeasts, generating alcohol and carbon dioxide.

At the end of this step, what is known as the riddling step is carried out, which has the aim of separating the residues of the spent yeasts from the wine, in order to clarify the latter. This step involves slowly rotating the bottles from a horizontal position to an almost vertical position with the bottle upside down, so that the yeast residues accumulate on the bottle cap.

This is followed by a disgorgement step, in which the yeast residues are removed from the bottle, and a dosage step in which the liquid in the bottles is topped up with a dosage syrup called "liqueur d'expedition".

There are known machines on the market for carrying out the disgorgement and dosage for producing sparkling wines that are able to carry out the aforesaid disgorgement and dosage steps in a completely automatic manner.

In particular, at the end of the riddling step, the neck of the bottles (still in an inverted position with the neck facing downwards) is subjected to a freezing step (by means of a cooling bath) in order to freeze the portion of the wine near the cork itself, which contains the spent yeast residues therein. Subsequently, the bottles with the frozen neck are placed in a vertical position on a conveyor belt arranged for feeding the machine which is adapted to carry out the disgorgement and dosage of the bottles with frozen neck.

In particular, linear disgorgement and dosage machines are known, which are located along the conveyor belt to receive the bottles from the latter and return them to a point downstream of the conveyor belt after they have been subjected to the disgorgement and dosage operations.

In particular, such linear machines comprise multiple operative stations arranged one after the other parallel to the conveyor belt in order to operate on the bottles in succession.

In more detail, an example of such machines comprises a disgorgement station at which the bottles are picked up from the inlet conveyor belt, tilted with respect to the vertical direction and the crown cap is then removed.

In more detail, the disgorgement station comprises a first rotation device, which is provided with a tilting arm provided with a gripper adapted to grip the neck of a bottle. In particular, when the bottle coming from the conveyor belt is positioned at the tilting arm, the gripper closes around the neck of the bottle and the arm rotates around a pin to tilt the bottle.

Furthermore, the disgorgement station comprises an uncapping device configured to remove the crown cap from the neck of the bottle with the latter tilted and held by the aforesaid grippers. In more detail, the uncapping device comprises a blade adapted to act on the edge of the cap, exerting a force adapted to remove the cap from the neck of the bottle itself.

In particular, the removal of the crown cap, due to the pressure inside the bottle following the development of carbon dioxide therein, involves the expulsion of the frozen portion of wine from the neck of the bottle and then the removal of the spent yeast residues from the bottle itself. Furthermore, the machine comprises a dosage station, placed downstream of the disgorgement station, at which the aforesaid dosage syrup (known as "liqueur d'expedition" or "liqueur de dosage") is topped up in the bottles.

In particular, the dosage station comprises a filling head provided with a dosing tap that can be inserted in the neck of the bottles and introduce the dosage syrup into the bottle.

Furthermore, the machine comprises movement means arranged for moving the tilted bottles from the disgorgement station parallel to the aforesaid conveyor belt, between the disgorgement station and the dosage station. In particular, the movement means comprise a conveyor with intermittent movement, for example a walking beam conveyor.

The machine further comprises a straightening station which is placed downstream of the dosage station, is fed by the movement means with bottles coming from the dosage station and is configured to return the bottles to the vertical position by placing them again on the conveyor belt to send them to the subsequent machines, such as a capping machine for closing the bottles with corks.

As indicated above, the machines for disgorgement and dosage described so far are called linear machines, since they process the bottles along a single conveyor belt. Such linear machines can reach a production volume of around 500 bottles/hour.

There are also disgorgement and dosage machines on the market provided with a pair of disgorgement stations placed side-by-side with each other along the conveyor belt, and a subsequent pair of dosage stations placed side-by-side with each other along the same conveyor belt. Such machines, also of the linear type, essentially allow the production volume to be doubled, bringing it to approximately 1000 bottles/hour.

The disgorgement and dosage machines briefly described so far have proven to be not free from drawbacks in practice.

The main drawback lies in the fact that linear machines (both those with a single disgorgement station and those with a double disgorgement station) have relatively modest production volumes, which are not compatible with industrial sparkling wine production characterized by high volumes. To solve such a technical problem, disgorgement and dosage machines of the rotating carousel type have been developed. In particular, as is known, rotary carousel machines are provided with rotary carousels comprising a plurality of disgorgement stations and a plurality of dosage stations placed around the perimeter of the carousel itself, each of which respectively performs the disgorgement and dosage on a bottle during the rotation of the carousel itself, significantly increasing the production volume of the machine.

However, this known type of disgorgement and dosage machine has also proven to be not free from drawbacks in practice.

The main drawback is that rotary carousel machines are structurally and mechanically complex, significantly increasing the production costs of the machines themselves with respect to linear type machines.

Furthermore, the known rotary carousel type machines are also considerably complex from an operative point of view, increasing the operating costs of the machine, which have a direct impact on the sparkling wine production costs.

### Presentation of the invention

In this situation, the problem underlying the present invention is to overcome the drawbacks manifested by the art known to date, by providing a machine for the disgorgement and dosage for producing sparkling wines, which allows increasing production volume while maintaining low production and machine operation costs.

A further object of the present invention is to provide a machine for the disgorgement and dosage for producing sparkling wines, which is constructionally simple.

A further object of the present invention is to provide a machine for the disgorgement and dosage for producing sparkling wines, which is structurally sound and reliable to use.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:
- Figure 1 shows a perspective view of the machine which is the subject of the present invention;
- Figure 2 shows a top view of the machine of Figure 1;
- Figure 3 shows a top view of a detail of an operative module of the machine of Figure 2;
- Figure 4 shows a front view of a detail of the operative module of Figure 3;
- Figure 5 shows a detail of an inlet station of the operative module of Figure 4;
- Figure 6 shows a detail of an outlet station of the operative module of Figure 4;
- Figure 7 shows a side view of a detail of a tilt station of the machine which is the subject of the present invention;
- Figure 8 shows a perspective view of a detail of a conveyor with intermittent movement of the machine which is the subject of the present invention;
- Figure 9 shows a perspective view of a detail of a disgorgement station of the machine which is the subject of the present invention.

### Detailed description of a preferred embodiment example

With reference to the attached drawings, the reference numeral 1 indicates as a whole an exemplary embodiment of the machine for the disgorgement and dosage for producing sparkling wines which is the subject of the present invention.

The machine 1 in question is intended to be advantageously employed in the production process of sparkling wines, preferably using the classic method, specifically after the riddling step, in order to carry out at least the disgorgement step, in which the accumulated yeast residues are removed from inside the bottle, and the dosage step, in which a dose of dosage syrup is introduced in the bottle. In this context, dosage syrup means a liquid mixture or syrup with a certain sugar content, used to increase the concentration of sugars in sparkling wine produced using the classic method, which is added in the final preparation step of the sparkling wine itself after disgorgement and before the final capping of the bottle, for example with a cork. The dosage syrup is also known in technical jargon as "liqueur d'expedition" or "liqueur de dosage".

In a conventional manner, each bottle 100 extends along a main axis from a bottom up to a mouth and comprises an enlarged body, extending from the bottom, and a thinned neck extending from the enlarged body to the mouth. In particular, the enlarged body and neck of the bottle 100 define a side surface of the latter.

Advantageously, the machine 1 in question is adapted to be inserted in a sparkling wine production line downstream of a machine known in technical jargon as a "neck freezer", which is arranged for receiving the bottles 100 at the end of the riddling step in an inverted position (with the cap facing downwards), freezing the necks thereof, in particular by means of a cooling bath. Freezing the neck of the bottle results in a consequent freezing of the portion of the wine near the cap itself, which contains the spent yeast residues therein.

Advantageously, the machine 1 which is the subject of the present invention comprises a support structure 2 intended to be rested on the ground and provided, for example, with a metal frame.

The machine 1 which is the subject of the present invention comprises first transport means 21, advantageously mechanically connected to the support structure 2, adapted to transport, along a first advancement direction A1, multiple bottles 100 closed with corresponding caps (in particular of the crown type).

Preferably, the first transport means 21 are adapted to transport the bottles 100 with frozen necks coming from the aforesaid neck freezing machine.

Advantageously, the first transport means 21 are adapted to transport the bottles 100 aligned in succession along the first advancement direction A1 and placed in a straight position. In particular, in the present context, straight position means that the bottle 100 is stably rested with the bottom thereof, with the mouth facing upwards and, in particular, the main axis substantially vertical. In more detail, when the bottles 100 are on the first transport means 21, each thereof is placed with the main axis thereof orthogonal to the first advancement direction A1 (in particular vertically) with the neck 102 placed above the enlarged body 101. Preferably, the first transport means 21 define a first advancement plane parallel to the first advancement direction A1, on which the bottoms of the bottles 100 to be transported can be restingly placed, which are placed in a straight position with the main axis thereof orthogonal to the first advancement plane.

Advantageously, the first transport means 21 comprise a first conveyor belt (for example made of rubber or mesh), which defines the aforesaid first advancement plane. Preferably, the first conveyor belt is driven by first motor means to advance along the first advancement direction A1, consequently transporting the bottles 100 restingly placed thereon.

Without departing from the scope of the present invention, the first transport means 21 can comprise a screw conveyor or a prong conveyor, which are well known to those skilled in the art and will not be discussed in greater detail below.

Furthermore, the machine 1 comprises an inlet station 22 intercepted by the first transport means 21 to receive the bottles 100, at least one treatment unit 3, which is adapted to receive the bottles 100 at the aforesaid inlet station 22. In particular, the treatment unit 3, preferably mechanically connected to the support structure 2, is arranged for performing the disgorgement and dosage on each bottle 100 received at the inlet station 22.

The machine 1 comprises an outlet station 23 arranged for receiving the bottles 100 from the treatment unit 3 itself.

In particular, each bottle 100 is carried by the first transport means 21 to the inlet station 22, and then transits in the outlet treatment unit 3 from which it reaches the outlet station 23. In the treatment unit 3, each bottle 100 at least undergoes disgorgement and dosage before being sent to the outlet station 23.

Furthermore, the machine 1 which is the subject of the present invention comprises second transport means 24, preferably mechanically connected to the support structure 2, which intercept the outlet station 23 and are adapted to transport the bottles 100 outside the outlet station 23, along a second advancement direction A2 parallel to and spaced from the first advancement direction A1. Advantageously, the second transport means 24 are adapted to transport the bottles 100 aligned in succession along the first advancement direction A2 and placed in a straight position. In particular, each bottle 100 on the second transport means 24 is placed with the main axis thereof orthogonal to the second advancement direction A2 with the neck 102 placed above the enlarged body 101. Advantageously, the first advancement direction A1 and the second advancement direction A2 are parallel to the ground. Thereby, the bottles 100 transported in a straight position by the first and second transport means 21, 24 are placed with the main axis thereof vertical with respect to the ground.

Preferably, the second transport means 24 define a second advancement plane parallel to the second advancement direction A2, on which the bottoms of the bottles 100 to be transported can be restingly placed.

Advantageously, the second transport means 24 comprise a second conveyor belt (for example made of rubber or mesh), which defines the aforesaid second advancement plane. Preferably, the second conveyor belt is driven by second motor means to advance along the second advancement direction A2, consequently transporting the bottles 100 restingly placed thereon.

The treatment unit 3 comprises multiple operative modules 4, which are placed between the inlet station 22 and the outlet station 23 and are side-by-side with each other along a flanking direction X substantially parallel to said first advancement direction A1.

Advantageously, each operative module 4 is arranged for picking up bottles 100 from the inlet station 22, performing the disgorgement and dosage on such bottles 100 (as will be described in detail below) and, after having performed such operations, depositing the bottles 100 at the outlet station 23.

Thereby, the placement of multiple operative modules 4 side-by-side with each other allows the machine 1 which is the object of the present invention to perform the disgorgement and dosage of multiple bottles 100 simultaneously, significantly increasing the production volume of the machine 1 itself.

Each operative module 4 comprises movement means 5, which are arranged for moving the bottles 100 from the inlet station 22 to the outlet station 23 along a third advancement direction A3 which is transverse, preferably orthogonal, to the first advancement direction A1 and to the second advancement direction A2. In particular, the third advancement direction A3 extends as a connection between the first and second advancement directions A1, A2 and is advantageously substantially horizontal.

The operative modules 4 define corresponding third advancement directions A3 parallel to each other. Thereby, in particular, the operative modules 4 can operate simultaneously on corresponding bottles 100.

Furthermore, each operative module 4 comprises several operative stations 6, which are placed in succession along the third advancement direction A3, preferably between the inlet station 22 and the outlet station 23, and comprise, advantageously in succession from the inlet station 22 towards the outlet station 23, at least one disgorgement station 61 and one dosage station 62.

The uncapping station 61 comprises an uncapping device 611, preferably mechanically connected to the support structure 2, arranged for removing the cap from the bottle 100.

The dosage station 62 is placed between the disgorgement station 61 and the outlet station 23 and comprises a dosing tap 621, preferably mechanically connected to the support structure 2, arranged for introducing a specific dose of dosage syrup in the bottle 100.

In other words, each operative module 4 has a linear structure, meaning in this case that the bottles 100 are processed, in particular by performing at least the disgorgement and dosage thereon, by the operative module 4 for successive stations along the second advancement direction A3. Thereby, each operative module 4 has a constructionally and operationally simple structure, allowing the production and operating costs of each operative module 4 and, therefore, of the machine 1 as a whole to be kept low.

Thereby, with the machine 1 which is the subject of the present invention, it is possible to significantly increase the production volume, in particular by providing several operative modules 4 placed side-by-side with each other which perform at least the disgorgement and dosage on several bottles 100 simultaneously, without however excessively increasing the complexity of the machine 1 itself (for example without the need to switch to a rotating carousel structure which would be structurally and operatively complex).

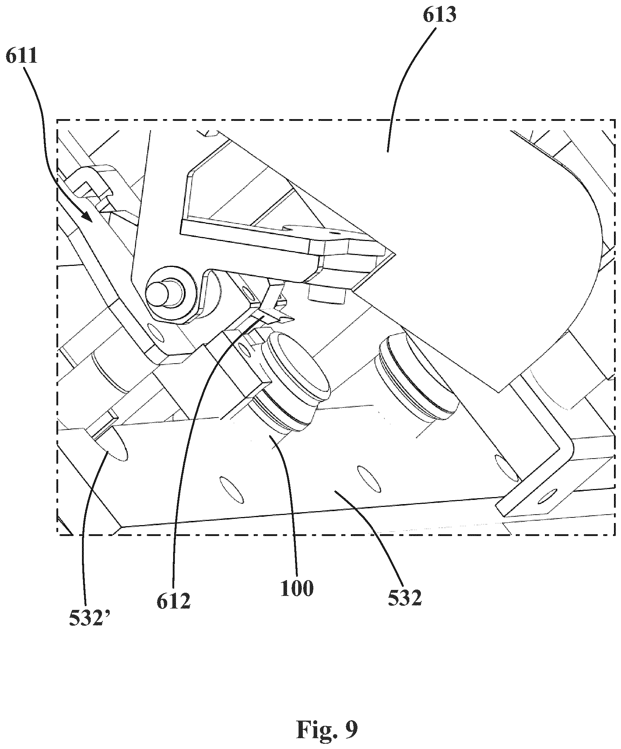

Advantageously, in accordance with Figure 9, the uncapping device 611 comprises an operative element 612, preferably a blade, which is adapted to act on the edge of the crown cap of the bottle 100 placed in the uncapping station 61 to remove the cap itself from the mouth of the bottle 100. The uncapping device 611 is well known to those skilled in the art and will therefore not be discussed in greater detail below.

Preferably, for each disgorgement station 61 the machine 1 comprises a conveying duct 613 (represented schematically and partially for example in Figure 9), advantageously mechanically connected to the support structure 2, which extends starting from an inlet mouth placed near the corresponding disgorgement station 61 and is preferably operatively connected to an external tank (not shown in the attached figures).

Operatively, following the removal of the cap from the bottle 100, due to the overpressure inside the latter (in particular caused by the production of carbon dioxide in the previous preparation steps of the sparkling wine), the cap itself and the portion of frozen wine containing the yeast residues are ejected towards the inlet mouth of the conveying duct 613, which is configured to convey them away from the operative module 4, in particular towards the aforesaid external tank, without dirtying the bottle 100 itself and the machine 1.

Preferably, the dosing tap 621 comprises a first supply duct, which is in fluid connection with a dosage syrup tank (not shown in the attached figures) and can be placed in fluid connection with the inside of the bottle 100 placed at the dosage station 62 to convey the dosage syrup itself towards the latter.

The dosing tap 621 is well known to those skilled in the art and will therefore not be discussed in greater detail below.

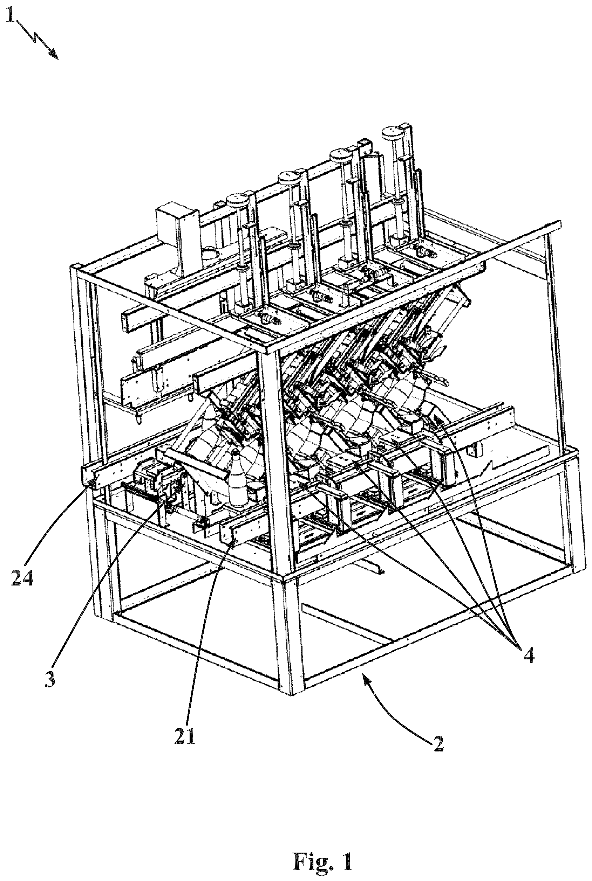

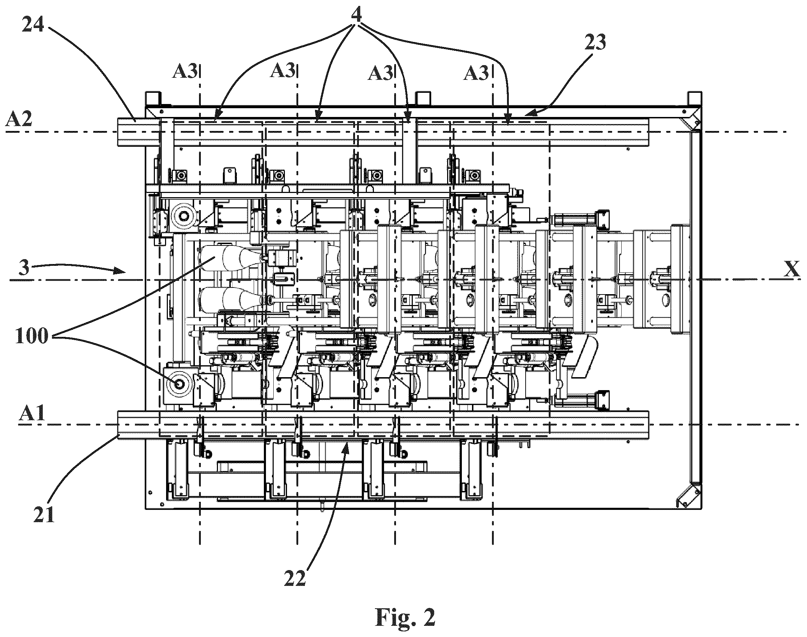

Advantageously, the treatment unit 3 of the machine 1 comprises at least two operative modules 4, preferably more than two, placed side-by-side with each other along the flanking direction X. For example, with reference to the embodiment of Figures 1 and 2, the machine 1 comprises four operative modules 4. Without departing from the scope of the present invention, the machine 1 can have any number of operative modules 4 placed side-by-side with each other along the flanking direction X.

Advantageously, with reference to Figure 2, the first transport means 21 and the second transport means 24 respectively extend along the first advancement direction A1 and the second advancement direction A2 spaced apart from each other, and the treatment unit 3 is interposed between the first transport means 21 and the second transport means 24.

Thereby, the arrangement of the transport unit 3, and therefore of the operative modules 4 (each of which, as reported above, extends along a respective third advancement direction A3 transverse to the first and second advancement direction A2), between the first transport means 21 and the second transport means 24 allows the longitudinal footprint of the machine 1 to be reduced while at the same time allowing more bottles 100 to be processed simultaneously.

Advantageously, each operative module 4 comprises a first rotation device 411, preferably mechanically connected to the support structure 2, arranged for receiving the bottle 100 from the inlet station 22 in a straight position and for tilting the bottle 100 itself from the straight position to a tilted position, advantageously to allow the uncapping device 611 of the disgorgement station 61 and the dosing tap 621 of the dosage station 62 to act on the bottle 100 in a tilted position.

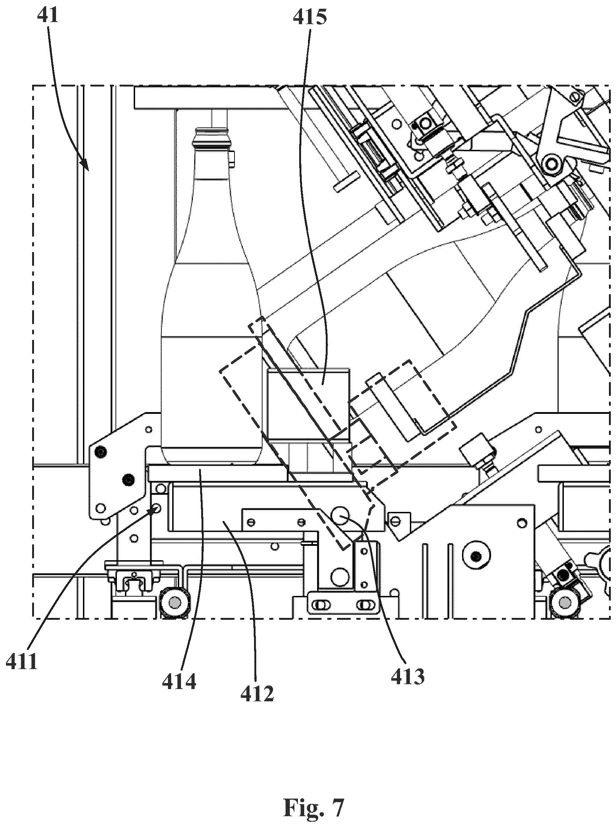

With reference in particular to Figure 7, the first rotation device 411 preferably comprises a first movable frame 412 hinged to the support structure 2 around a first pin 413 substantially parallel to the third advancement direction A3, a first plate 414, which is fixed to the first movable frame 412 and on which the bottom of the bottle 100 can be restingly placed, and a first side abutment element 415, which is fixed to the first movable frame 412 and on which the side surface of the bottle 100 can be at least partially restingly placed.

Preferably, the first movable frame 412 of the first rotation device 411 is rotatably connected around the first pin 413 between a first reception position, in which the first plate 414 is arranged parallel to the first advancement direction A1 of the first transport means 21, and advantageously aligned with the first advancement plane of the latter, and a first release position (in particular represented by a dashed line in Figure 7), in which the first plate 414 is placed tilted with respect to the first extension direction A1. Preferably, when the rotation device is in the first receiving position it is arranged for receiving, in particular by means of the action of the movement means 5, a bottle 100 in a straight position from the inlet station 22 with the bottom restingly placed on the first plate 414.

Advantageously, at least when the first movable frame 412 is in the first release position, the bottle 100 is placed with the side surface thereof resting on the first side abutment element 415.

Operatively, when the first movable frame 412 is in the first receiving position, the first rotation device 411 receives the bottle in a straight position, in particular with the bottom resting on the first plate 414, and the rotation of the first movable frame 412 from the first receiving position to the first release position results in a consequent rotation of the bottle 100 from the straight position to the tilted position.

Advantageously, the first rotation device 411 comprises a first actuator 416 (preferably chosen between an electric, pneumatic or hydraulic actuator) mechanically connected to the support structure 2 and to the movable frame 412 and adapted to actuate the latter in rotation between the first receiving position and the first release position.

Advantageously, each operative module 4 comprises a second rotation device 421, advantageously mechanically connected to the support structure 2, arranged between the dosage station 62 and the outlet station 23 and arranged for tilting the bottle 100 from the tilted position to the straight position.

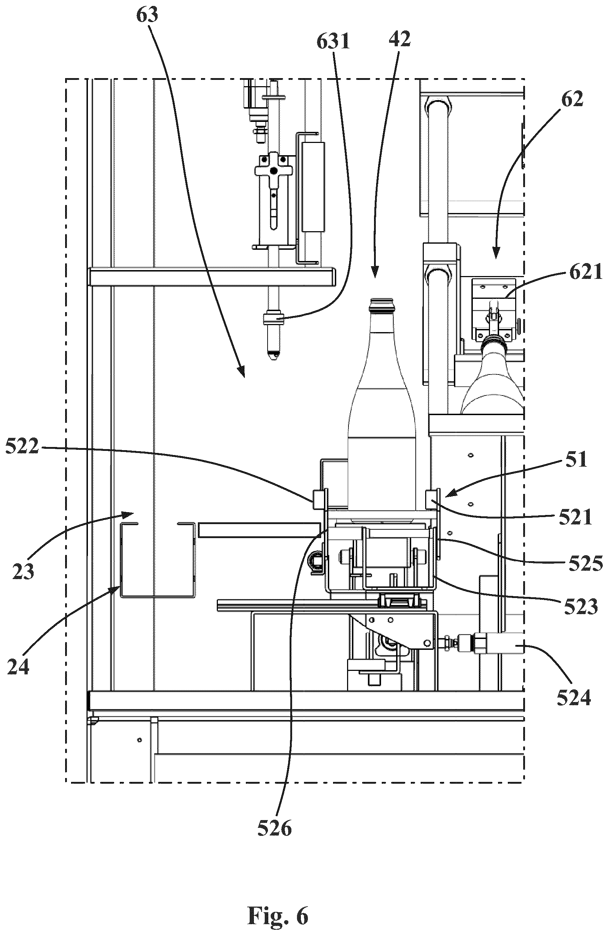

With reference to Figure 6, the second rotation device 421 preferably comprises a second movable frame 422 hinged to the support structure 2 around a second pin 423 substantially parallel to the third advancement direction A3, a second plate 424, which is fixed to the second movable frame 422 and on which the bottom of the bottle 100 can be restingly placed, and a second side abutment element 425, which is fixed to the second movable frame 422 and on which the side surface of the bottle 100 can be at least partially restingly placed.

Preferably, the second movable frame 422 of the second rotation device 421 is rotatably connected around the second pin 423 between a second receiving position, in which the second plate 424 is placed tilted with respect to the second extension direction A2 of the second transport means 24 and at which it can receive, in particular from the movement means 5, the bottle 100 in a tilted position, and a second release position, in which the second plate 424 is placed parallel to the second advancement direction A2, and advantageously aligned with the second advancement plane, to allow the transfer of the bottle 100 in a straight position towards the second transport means 24 by the aforesaid movement means 5.

Advantageously, at least when the second movable frame 422 is in the second receiving position, the bottle 100 is placed with the side surface thereof resting on the second side abutment element 425.

Operatively, when the second movable frame 422 is in the second receiving position, the second rotation device 421 receives the bottle in a tilted position, in particular with the bottom resting on the second plate 424 and the side surface resting on the second side abutment element 425, and the rotation of the second movable frame 422 from the second receiving position to the second release position results in a consequent rotation of the bottle 100 from the tilted position to the straight position.

Advantageously, the second rotation device 421 comprises a second actuator (not illustrated in the attached figures) (preferably chosen between an electric, pneumatic or hydraulic actuator) mechanically connected to the support structure 2 and to the second movable frame 422 and adapted to actuate the latter between the second receiving position and the second release position. Advantageously, the operative stations 6 of each operative module 4 comprise a tilt station 41, which is placed between the inlet station 22 and the disgorgement station 61 and comprises the aforesaid first rotation device 411 which is adapted to place the bottle 100 in the tilted position. Preferably, the bottle 100, after it has been placed in the tilted position by the first rotation device 411, is adapted to be transported by the movement means 5 into the disgorgement station 61 in such a tilted position.

Thereby, the arrangement of the tilt station 41 separate from the disgorgement station 61 (unlike the machines of the prior art which performed the tilting of the bottle 100 and the disgorgement in a single operative station) allows for a significant reduction in the overall cycle time, in particular as it is not necessary for the bottle 100 to remain stationary in a single station both for the time required to tilt it and for the time required for disgorgement, allowing for an increase in the production volume of the machine 1 itself.

According to a different embodiment not shown in the attached figures, the first rotation device 411 is placed at the uncapping station 61, and is adapted to receive the bottle 100 in a straight position and to rotate it into a tilted position before the uncapping device 611 removes the cap from the bottle 100.

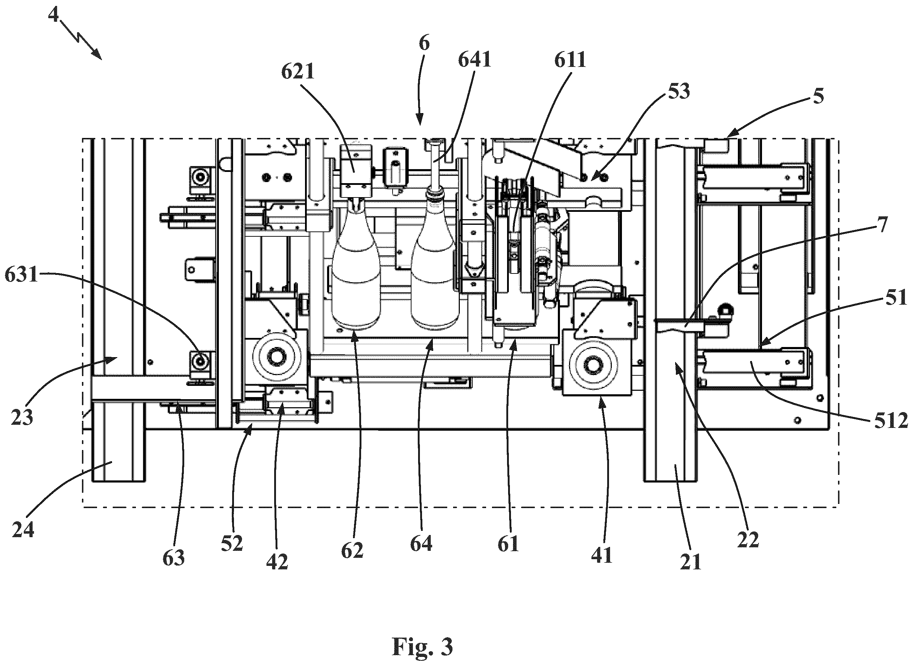

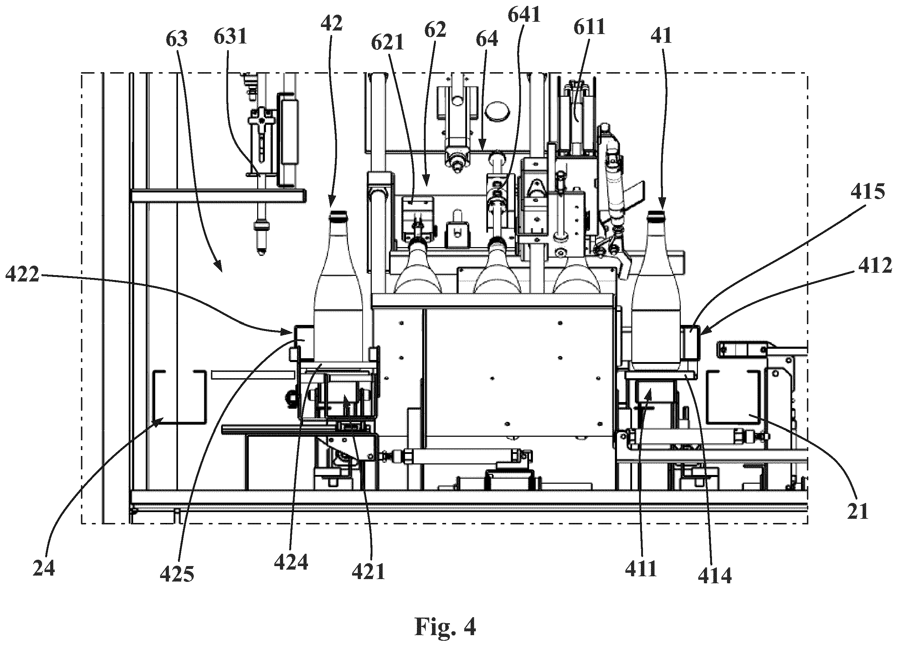

Advantageously, with reference to Figures 3 and 4, the operative stations 6 of each operative module 4 comprise a portion removal station 64, which is placed between the disgorgement station 61 and the dosage station 62. Such a portion removal station 64 comprises a portion removal tap 641, preferably mechanically connected to the support structure 2, arranged for removing a quantity of wine from the bottle 100 to reduce the level of wine in the bottle 100 before introducing the dosage syrup in the next dosage station 62.

Thereby, reducing the level of wine in bottle 100 reduces the risk that the chemical reaction generated inside the bottle 100 following the addition of the dosage syrup causes wine to leak out of bottle 100 itself, dirtying it and the machine 1.

Advantageously, the portion removal station 64 receives the bottle 100 coming from the disgorgement station 61 transported by the movement means 5 in a tilted position and carries out the portion removal on the bottle 100 with the latter in a tilted position.

Preferably, the portion removal tap 641 comprises an introduction duct which is in fluid connection with a source of inert gas (not shown in the attached figures) and can be placed in fluid connection with the inside of the bottle 100 to introduce the inert gas into the latter, and a return duct, which can be placed in fluid connection with the inside of the bottle 100, which is arranged for conveying out of the latter the wine pushed by the overpressure in the bottle 100 itself by the inert gas introduced from the introduction duct.

Advantageously, the return duct is in fluid communication with a recovery tank (not shown in the attached figures) to convey to the latter the wine removed from the bottles 100 in the portion removal station 64.

The portion removal tap 641 is well known to those skilled in the art and will not be discussed in greater detail below.

Advantageously, with reference to Figures 4 and 6, the operative stations 6 of each operative module 4 comprise a filling station 63, which is placed between the dosage station 62 and the outlet station 23 and comprises a refilling valve 631, preferably mechanically connected to the support structure 2, arranged for introducing a filling liquid, preferably wine, into the bottle 100. Thereby, if following the introduction of the dose of dosage syrup in the dosage station 62, the level of wine inside the bottle 100 is lower than a certain desired level (for example due to the removal of a part of the wine in the aforesaid portion removal 64), it is possible to introduce wine into the bottle 100 by means of the filling station 63 to bring the level of the wine inside the bottle 100 up to the desired level.

Preferably, the refilling valve 631 comprises a second supply duct, which is in fluid connection with a filling liquid tank (not shown in the attached figures) and can be placed in fluid connection with the inside of the bottle 100 to convey the filling liquid towards the latter until the desired quantity is reached inside the bottle 100.

The refilling valve 631 is well known to those skilled in the art and will not be discussed in greater detail below.

Advantageously, in accordance with the embodiment shown in the attached figures, the operative stations 6 of each operative module 4 comprise a straightening station 42, which is preferably placed between the dosage station 62 and the filling station 63. Advantageously, the straightening station comprises the aforesaid second rotation device 421, which is adapted to place the bottle 100 in a straight position. Preferably, after the bottle 100 has been placed in the straight position by the second rotation device 421, it is adapted to be transported by the movement means 5 into the filling station 63 in such a straight position.

Thereby, the filling of the bottle 100 occurs with the latter in a straight position, thus reducing the risk of liquid leaking out, and in particular the formation of foam caused by the introduction of the filling liquid which could lead to foam and wine leaking out of the bottle 100, dirtying the latter and the machine 1.

In accordance with an embodiment not shown in the attached figures, the second rotation device 421 is placed at the dosage station 62, and is adapted to receive the bottle 100 in a tilted position and to rotate it into a straight position after the dosing tap 621 has introduced the dose of dosage syrup into the bottle 100.

In accordance with a further embodiment not shown in the attached figures, the straightening station 42 is placed between the filling station 63 and the outlet station 23. Thereby, the introduction of the filling liquid into the bottle 100 occurs with the latter in a tilted position.

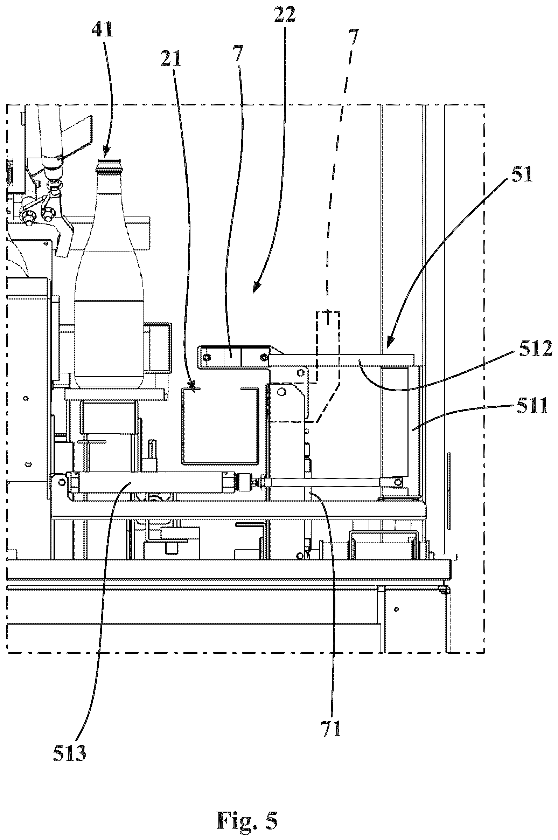

With reference to Figure 5, the movement means 5 comprise a first transfer device 51, preferably mechanically connected to the support structure 2, which is placed at the inlet station 22, is positioned substantially aligned with the corresponding third advancement direction A3 and is adapted to be actuated to intercept the bottle 100 on the first transport means 21 and to carry it to the corresponding operative module 4.

Advantageously, the first transfer device 51 is arranged for moving the bottle 100 placed on the first transport means 21 from the inlet station 22 to the tilt station 41.

With reference to the example of Figure 5, the first transfer device 51 comprises a first carriage 511, which is preferably slidably connected to the support structure 2 along a first movement direction parallel to the third advancement direction A3, and a pusher element 512 fixed to the first carriage 511 and arranged for acting on the side surface of the bottle 100 to move it along the third advancement direction A3 as a consequence of a movement of the first carriage 511 along the first movement direction.

Preferably, the first carriage 511 is movable between a backward position (represented in Figure 5), in which the pusher element 512 is placed spaced from the first advancement direction A1 of the first conveyors 21 (and therefore from the bottles 100 placed thereon in the inlet station 22), and a forward position, in which the pusher element 512 is placed at the tilt station 41. Advantageously, the first transfer device 51 comprises a third actuator 513 (preferably chosen between an electric, pneumatic or hydraulic actuator) mechanically connected to the support structure 2 and to the first carriage 511 and adapted to actuate the latter along the first movement direction, preferably between the backward position and the forward position.

Operatively, when the bottle 100 transported by the first transport means 21 is placed in the inlet station 21 aligned with the third advancement direction A3 of the corresponding operative module 4, the first carriage 511 is actuated, preferably by the third actuator 513, to move from the backward position to the forward position with the pusher element 512 acting on the side surface of the bottle 100 itself, causing a consequent translation of the latter along the third advancement axis A3. Advantageously, in this situation, the first movable frame 412 of the first rotation device 411 is in the first receiving position. Thereby, the pusher element 512 of the first transfer device 51 pushes the bottle 100 by sliding the bottom of the latter from the first advancement plane of the first transport means 21 up to the first plate 414 of the first rotation device 411.

With reference to Figure 6, the movement means 5 of each operative module 4 comprise a second transfer device 52, preferably mechanically connected to the support structure 2, which is placed between the dosage station 62 and the outlet station 23, is positioned substantially aligned with the corresponding third advancement direction A3 and is adapted to be actuated to intercept the bottle 100 in the corresponding operative module 5 and carry it onto the second transport means 24. Advantageously, in accordance with the embodiment shown in the attached figures, the second transfer device 52 is arranged for moving the bottle 100 from the straightening station 42 to the filling station 63 and, subsequently, from the filling station 63 to the outlet station 23, at which point the bottle 100 is introduced on the second transport means 24.

Advantageously, the second transfer device 52 comprises a first movable wall 521, which can be actuated to move between the straightening station 42 and the filling station 63 to move the bottle 100 from the straightening station 42 to the filling station 63, and a second movable wall 522, which is spaced from the first movable wall 521 in the third advancement direction A3 and can be actuated to move between the filling station 63 and the outlet station 23 to move the bottle 100 from the filling station 63 to the outlet station 23.

With reference to Figure 6, the second transfer device 52 comprises a second carriage 523 which is preferably slidably connected to the support structure 2 along a second movement direction parallel to the third advancement direction A3 between a first position, in which the first movable wall 521 is at the straightening station 42 and the second movable wall 522 is at the filling station 63, and a second position, in which the first movable wall 521 is at the filling station 63 and the second movable wall 522 is at the outlet station 23.

Advantageously, the second transfer device 52 comprises a fourth actuator 524 (preferably chosen between an electric, pneumatic or hydraulic actuator) mechanically connected to the support structure 2 and to the second carriage 523 and adapted to actuate the latter along the second movement direction between the first position and the second position.

Advantageously, the movable walls 521, 522 are mechanically connected to the second carriage 523 and are movable, with respect to the latter, between an interference position (represented in the attached figures), in which the movable walls 521, 522 are placed to intercept the third advancement direction A3 and are adapted to act on respective bottles 100 to move them along the third advancement direction A3 following the movement of the second carriage 523 from the first position to the second position, and a non-interference position, in which the movable walls 521, 522 are placed spaced from the third advancement direction A3 and do not act on any bottle 100. Preferably, when the second carriage 523 is actuated by the fourth actuator 524 to move from the first position to the second position, the movable walls 521, 522 are in the interference position. Thereby, the first movable wall 521 acts on the bottle 100 placed in the straightening station 42 to move it from such a straightening station 42 to the filling station 63, and at the same time the second movable wall 522 acts on the bottle 100 placed in the filling station 63 to move it from such a filling station 63 to the outlet station 23.

Preferably, when the second carriage 523 is actuated by the fourth actuator 524 to move from the second position to the first position, the movable walls 521, 522 are in the non-interference position. Thereby, the second carriage 523 can return to the first position without the movable walls 521, 522 interfering with the bottles 100 placed along the third advancement direction A3, in particular in the filling stations 63 and straightening stations 42.

Preferably, the second transfer device 52 comprises a first tilting element 525 to which the first movable wall 521 is fixed and a second tilting element 526 to which the second movable wall 522 is fixed, which are hinged to the second carriage 523 around corresponding rotation axes parallel to the third advancement direction A3.

Advantageously, the second transfer device 52 comprises a fifth actuator (not shown in the attached figures) mechanically connected to the tilting elements 525, 526 and actuatable to rotate them around the corresponding rotation axis between a horizontal position (shown in the attached figures), in which the movable walls 521, 522 are in the interference position, and a vertical position, in which the movable walls 521, 522 are in the non-interference position. Advantageously, the movement means 5 comprise a conveyor 53 with intermittent movement, which is arranged between the first transfer device 51 and the second transfer device 52 and is movable along the third movement direction A3 to carry each bottle 100 in succession to the operative stations 6.

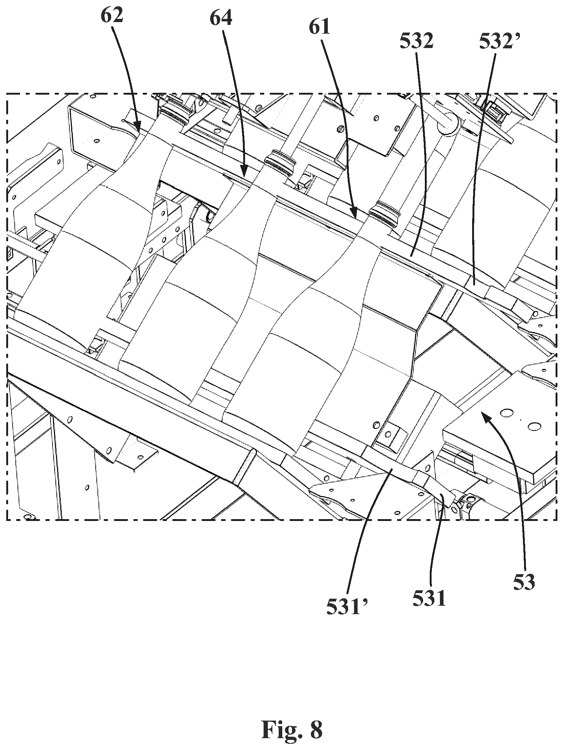

With reference to Figure 8, the conveyor 53 with intermittent movement comprises a lower support element 531 and an upper support element 532, which extend parallel to the third advancement direction A3 between a first end facing the first transport means 21 and a second end facing the second transport means 24, and are placed spaced apart from each other and parallel to each other. Advantageously, the lower support element 531 comprises first housing seats 531' in particular in a number equal to the operative stations 6 of the operative module 4, adapted to house corresponding bottles 100 to be transported along the third advancement direction A3.

Advantageously, the upper support element 532 comprises second housing seats 532', each of which is arranged aligned, perpendicular to the third advancement direction A3, with a corresponding first housing seat 531' of the upper support element 531.

Preferably, the first housing seats 531' of the lower support element 531 are adapted to house the enlarged body of the bottles 100 to be transported, and the housing seats 532' of the upper support element 532 are adapted to house the neck of the bottles 100 to be transported. Advantageously, the conveyor 53 with intermittent movement can be actuated to move cyclically in a first operative stroke, in which it is moved towards the outlet station 23 to move the bottles 10 from one of the operative stations 6 to the next, and in a return stroke, in which it is moved towards the inlet station 22 by a distance (along the third advancement direction A3) equal to that completed in the first operating stroke.

During the first operative stroke, the conveyor 53 with intermittent movement is placed to intercept the third advancement direction A3 to act on the bottles 100 to be moved, and during the second operative stroke, the conveyor 53 with intermittent movement is spaced from the third advancement direction A3 so as not to interfere with the bottles 100 placed in the operative stations 6.

In particular, the conveyor 53 with intermittent movement performs the aforesaid operative strokes by means of a movement known as "walking beam", known to those skilled in the art.

Advantageously, in accordance with a particular embodiment, the conveyor 53 with intermittent movement comprises actuator means (not illustrated) which are adapted to move the support elements 531, 532 parallel to the third advancement direction A3 alternatively between a first longitudinal position and a second longitudinal position. Preferably, when the support elements 531, 532 are in the first longitudinal position, the first end thereof is placed at the tilt station 41 and the second end thereof is placed at the dosage station 62, and when they are in the second longitudinal position the second end thereof is placed at the straightening station 42 and the first end thereof is placed at the disgorgement station 61.

Advantageously, the actuator means are adapted to move the support elements 531, 532 perpendicularly to the third advancement direction A3 alternatively between a first transverse position in which they are placed at the operative stations 6 of the operative module 4, and a second transverse position in which they are placed at the operative stations 6 transversely to the third advancement direction A3.

Preferably, when the support elements 531, 532 are in the first transverse position, the bottles 100 are restingly placed on the support elements 531, 532 respectively with the enlarged body engaged in the corresponding first housing seat 531' of the lower support element 531 and with the neck engaged in the corresponding second housing seat 532' of the upper support element 532. Advantageously, when the support elements 531, 532 are in the second transverse position, they are placed spaced from the bottles 100 and therefore do not act thereon.

Operatively, the conveyor 53 with intermittent movement performs a movement cycle described below. Initially, the support elements 531, 532 are in the first longitudinal position and in the first transverse position. Subsequently, the actuator means actuate the support elements 531, 532 to move parallel to the third advancement direction A3 from the first longitudinal position to the second longitudinal position (performing the aforesaid first operative stroke), so as to simultaneously move all the bottles 100 that engage the housing seats 531', 532' along the advancement direction A3. In particular, in the first operative stroke, each bottle 100 is moved up to the operative station 6 following the one in which it was located at the beginning of the cycle (with direction from the tilt station 41 to the straightening station 42).

Subsequently, the conveyor 53 with intermittent movement performs the aforesaid return stroke, in which the actuator means actuate the support elements 531, 532 to move perpendicularly to the third advancement direction A3 from the first transverse position to the second transverse position, so as to distance them from the operative heads 6, disengaging them from the bottles 100 just moved. Then, the actuator means actuate the support elements 531, 532 to move parallel to the third advancement direction A3 from the second longitudinal position to the first longitudinal position, so as to return the first end of the support elements 531, 532 to the tilt station 42 without moving any bottle 100. Finally, the actuator means actuate the support elements 531, 532 to move perpendicularly to the third advancement direction A3 from the second transverse position to the first transverse position, returning them to the cycle start condition.

Thereby, as indicated above, the conveyor 53 with intermittent movement performs what in technical jargon is commonly known as "walking beam" movement.

With reference to Figures 2, 4 and 5, the machine 1 advantageously comprises multiple alignment bodies 7, preferably mechanically connected to the support structure 2, located at the inlet station 22 and each of which is positioned substantially aligned with the corresponding operative module 4 according to the third advancement direction A3.

Preferably, each alignment body 7 is actuatable to move between a stop position, in which it is placed to intercept the first advancement direction A1 to receive a corresponding bottle 100 on the first transport means 21 and stop it aligned with the corresponding third advancement direction A3, and an advancement position, in which the alignment body 7 is placed spaced from the first advancement direction A1 to allow the advancement of the bottles 100 on the first transport means 21 along the first advancement direction A1.

Preferably, each alignment body 7 is hinged to the support structure 2 around an axis substantially parallel to the first advancement direction A1 between the aforesaid stop position, in which the alignment body 7 is advantageously substantially lowered, and the aforesaid advancement position (represented by the dashed line in Figure 5), in which the alignment body 7 is advantageously substantially raised.

With reference to Figure 5, the machine 1 comprises, for each alignment body 7, a sixth actuator 71, which is mechanically connected to the support structure 2 and to the alignment body 7 and is arranged for operating the corresponding alignment body 7 between the stop position and the advancement position.

Preferably, the alignment body 7 placed aligned with the last operative module 4 (with respect to the advancement direction of the bottles 100 along the first advancement direction A1) is always in the stop position.

Advantageously, all the alignment bodies 7, preferably except the one aligned with the last operative module 4, are moved simultaneously between the stop position and the advancement position and vice versa.

Operatively, after the first transfer devices 51 of the movement means 5 of each operative module 4 have moved the corresponding bottles 100 from the inlet station 21 to the tilt station 41 and have then returned to the backward portion, the alignment bodies 7 are actuated to move from the stop position to the advancement position, so as to allow the transit of the bottles 100 along the advancement line, replacing in the inlet station 21 those just moved by the aforesaid first transfer devices 51. In such a situation, the alignment bodies 7 remain in the advancement position for a time interval sufficient to allow the transit in front of the first operative module 4 (with respect to the advancement direction of the bottles 100 along the first advancement direction A1) of a number of bottles 100 equal to the number of operative modules placed downstream of the first operative module 4.

Subsequently, the alignment bodies 7 are returned to the stop position to stop the bottles 100 in front of the respective operative modules 4.

Subsequently, advantageously, the first transfer means 51 are actuated to move into the forward position to push the bottles 100 into the tilt station 41 of the corresponding operative module 4. Thereby, all the operative modules 4 of the treatment unit 3 receive a bottle 100 to be treated from the inlet station 21.

In accordance with an embodiment not shown in the attached figures, the machine 1 comprises an accumulation table, known in technical jargon as a "buffer", which is preferably placed to intercept the first transport means 21 and is adapted to pick up bottles 100 transported by the first transport means 21 to accumulate them and to feed the first transport means 21 with bottles 100 previously accumulated thereon.

For example, in the event of a temporary stoppage of one of the operative modules 4 of the treatment unit 3, the latter treats a quantity of bottles 100 per unit of time that is lower than those transported by the first transport means 21. In such a situation, the accumulation table can accumulate a quantity of bottles so as not to require slowing down the first transport means21. Subsequently, when the productivity of all the operative modules 4 has been re-established, the accumulation table feeds the first transport means 21 so to progressively reduce the accumulation of bottles 100 on the accumulation table itself.

In accordance with a first embodiment variant, the accumulation table is arranged for intercepting the first transport means 21 downstream of the inlet station 22 (with respect to the first advancement direction A1).

In accordance with a second embodiment, the accumulation table is arranged for intercepting the first transport means 21 at the inlet station 22.

Therefore, the invention thus conceived achieves the pre-set objects.

## Claims

1. Machine for the disgorgement and dosage for producing sparkling wines, which comprises:
- first transport means (21) adapted to transport, along a first advancement direction (A1), multiple bottles (100) closed with corresponding caps;
- an inlet station (22) intercepted by said first transport means (21) in order to receive said bottles (100);
- at least one treatment unit (3), which is adapted to receive said bottles (100) at said inlet station (22);
- an outlet station (23), arranged for receiving said bottles (100) from said treatment unit (3);
- second transport means (24), which intercept said outlet station (23) and are adapted to transport said bottles (100) outside said outlet station (23), along a second advancement direction (A2) parallel to and spaced from said first advancement direction (A1);
in which said treatment unit (3) comprises multiple operative modules (4), which are placed between said inlet station (22) and said outlet station (23) and are side-by-side each other along a flanking direction (X) substantially parallel to said first advancement direction (A1);
in which each said operative module (4) comprises:
- movement means (5), which are arranged for moving said bottles (100) from said inlet station (22) to said outlet station (23) along a third advancement direction (A3) transverse to said first advancement direction (A1) and to said second advancement direction (A2);
- multiple operative stations (6), which are placed in succession along said third advancement direction (A3) and comprise at least:
- one disgorgement station (61), which comprises an uncapping device (611) arranged for removing said cap from said bottle (100);
- one dosage station (62), which is placed between said disgorgement station (61) and said outlet station (23) a comprises a dosing tap (621) arranged for introducing, in said bottle (100), a specific dose of dosage syrup.

2. Machine according to claim 1, **characterized in that** each said operative module (4) comprises:
- a first rotation device (411) arranged for receiving, from said inlet station (22), said bottle (100) in a straight position and in order to tilt said bottle (100) from said straight position to a tilted position;
- a second rotation device (421) placed between said dosage station (62) and said outlet station (23) and arranged for tilting said bottle (100) from said tilted position to said straight position.

3. Machine according to claim 2, **characterized in that** the operative stations (6) of each said operative module (4) comprise a tilt station (41), which is placed between said inlet station (22) and said disgorgement station (61) and comprises said first rotation device (411), which is adapted to place said bottle (100) in said tilted position, and such bottle (100) is adapted to be transported by means of said movement means (5) into said disgorgement station (61) in said tilted position.

4. Machine according to any one of the preceding claims, **characterized in that** the operative stations (6) of each said operative module (4) comprise a filling station (63), which is placed between said dosage station (62) and said outlet station (23) and comprises a refilling valve (631) arranged for introducing, in said bottle (100), a filling liquid.

5. Machine according to claims 3 and 4, **characterized in that** the operative stations (6) of each said operative module (4) comprise a straightening station (42), which is placed between said dosage station (62) and said filling station (63) and comprises said second rotation device (421), which is adapted to place said bottle (100) in said straight position, and such bottle (100) is adapted to be transported by means of said movement means (5) into said filling station (63) in said straight position.

6. Machine according to any one of the preceding claims, **characterized in that** said movement means (5) comprise at least one first transfer device (51), which is placed at said inlet station (22) and is positioned substantially aligned with the corresponding said third advancement direction (A3) and is adapted to be actuated in order to intercept said bottle (100) on said first transport means (21) and carry it into corresponding said operative module (4).

7. Machine according to any one of the preceding claims, **characterized in that** said movement means (5) comprise at least one secondo transfer device (52), which is placed between said dosage station (62) and said outlet station (23), is positioned substantially aligned with the corresponding said third advancement direction (A3) and is adapted to be actuated in order to intercept said bottle (100) in the corresponding said operative module (5) and carry it onto said second transport means (24).

8. Machine according to claims 6 and 7, **characterized in that** said movement means (5) comprise a conveyor with intermittent movement (53), which is placed between said first transfer device (51) and said second transfer device (52) and is movable along said third movement direction (A3) in order to carry each said bottle (100) in succession into said operative stations (6).

9. Machine according to claim 5 and claim 7 or 8, **characterized in that** each said second transfer device (52) comprises:
- a first movable wall (521), which is actuatable to be moved between said straightening station (42) and said filling station (63) in order to move said bottle (100) from said straightening station (42) to said filling station (63), and
- a second movable wall (522), which is placed spaced from said first movable wall (521) according to said third advancement direction (A3) and is actuatable to be moved between said filling station (63) and said outlet station (23) in order to move said bottle (100) from said filling station (63) to said outlet station (23).

10. Machine according to any one of the preceding claims, **characterized in that** it comprises multiple alignment bodies (7) placed at said inlet station (22) and each of which is positioned substantially aligned with the corresponding said operative module (4) according to said third advancement direction (A3) and is actuatable to be moved between a stop position, in which said alignment body (7) is placed to intercept said first advancement direction (A1) in order to receive, in abutment, a corresponding said bottle (100) on said first transport means (21) and stop it aligned with the corresponding said third advancement direction (A3), and an advancement position, in which said alignment body (7) is placed spaced from said first advancement direction (A1) in order to allow the advancement of said bottles (100) on said first transport means (21) along said first advancement direction (A1).
